# EUROPEAN PATENT SPECIFICATION

(11) **EP 3 815 995 B1**
(45) Date of publication and mention of the grant of the patent: **23.08.2023**
(21) Application number: 20187390.8
(22) Date of filing: 23.07.2020
(51) Int. Cl.: B60T 8/1766, B60T 8/1769, B60W 30/18

(54) **ECO-FRIENDLY VEHICLE AND METHOD OF CONTROLLING BRAKING FOR THE SAME**
UMWELTFREUNDLICHES FAHRZEUG UND VERFAHREN ZUR STEUERUNG DES BREMSENS DAVON
VÉHICULE ÉCOLOGIQUE ET SON PROCÉDÉ DE COMMANDE DE FREINAGE

(30) Priority: 29.10.2019 KR 20190135385
(43) Date of publication of application: 05.05.2021
(73) Proprietor: HYUNDAI MOTOR COMPANY, Seoul 06797 (KR); Kia Corporation, Seocho-gu Seoul 06797 (KR)
(72) Inventor: Park, Joon Young, Seoul 06797 (KR)
(74) Representative: Hoffmann Eitle

(56) References cited:
- DE-A1-102005 057 285
- US-A1- 2014 121 870
- US-A1- 2016 264 111
- US-A1- 2017 113 555
- US-A1- 2018 118 193

## Description

### TECHNICAL FIELD

The present invention relates to an eco-friendly vehicle and a method of controlling braking for the same.

### BACKGROUND

Recently, as interest in the environment increases, there has been a great deal of research on eco-friendly vehicles. A representative eco-friendly vehicle includes an electric vehicle (EV) or a hybrid electric vehicle (HEV). For example, US 2017/0113555 A1 discloses braking control method for a vehicle. The vehicle distributes and transmits a driving force of a vehicle driving source to front and rear wheels based on a power distribution rate. The method includes determining a total braking force based on a brake signal corresponding to brake pedal manipulation, calculating a front and rear wheel braking force satisfying the total braking force, and calculating a regenerative and frictional braking force satisfying the total braking force. The method further includes determining a power distribution rate range to the front and rear wheels during braking using the calculated front and rear wheel braking force and regenerative braking force, determining a power distribution rate to the front and rear wheels based on a vehicle driving condition, within the determined power distribution rate range; and adjusting distribution of the power to the front and rear wheels at the power distribution rate.

A hybrid electric vehicle (HEV) is a vehicle that uses two power sources, typically an engine and an electric motor. An HEV has excellent fuel efficiency and engine performance compared with a vehicle having only an internal combustion engine and is also advantageous for lowering emissions, and thus has been actively developed recently.

Such a hybrid vehicle travels in two modes according to a powertrain used to drive the vehicle. One of the modes is an electric vehicle (EV) mode in which the vehicle travels using only an electric motor and the other mode is a hybrid electric vehicle (HEV) mode of operating both an electric motor and an engine to acquire power. A hybrid vehicle switches between the two modes according to driving conditions. In general, switch between traveling modes is performed to maximize fuel efficiency or driving efficiency depending on the efficiency characteristics of a powertrain.

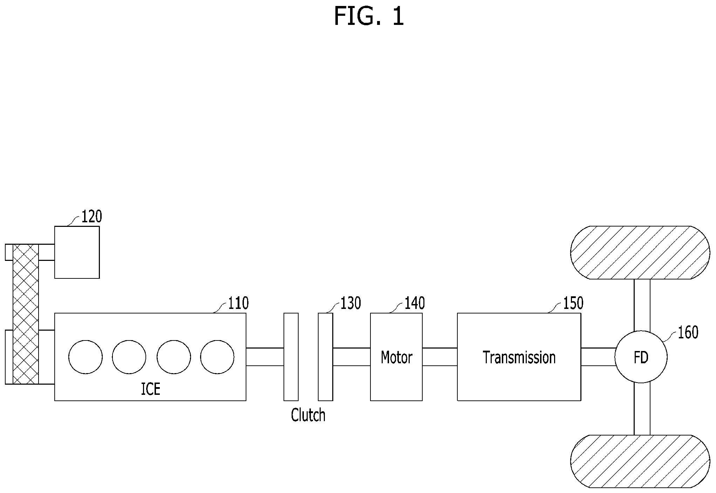

FIG. 1 is a diagram illustrating an example of a powertrain structure of a general hybrid vehicle.

FIG. 1 illustrates a powertrain structure of a hybrid vehicle employing a parallel type or transmission mounted electric drive (TMED) method.

Referring to FIG. 1, an electric motor 140 (or a driving motor) and an engine clutch 130 are disposed between an internal combustion engine (ICE) 110 and a transmission 150.

In such a vehicle, in general, when a driver presses an accelerator after turning on the vehicle, the motor 140 is driven using power of a battery while the engine clutch 130 is open and transmits power of the motor to move wheels through the transmission 150 and a final drive (FD) 160 (i.e., EV mode). As the vehicle gradually accelerates, high driving force is further required and, in this case, an auxiliary motor (or a starter generator motor 120) may be operated to drive the engine 110.

Accordingly, when rotational speeds of the engine 110 and the motor 140 are equal to each other, the engine clutch 130 is then engaged such that both the engine 110 and the motor 140 drive the vehicle (i.e., transition to an HEV mode from an EV mode). When a predetermined engine off condition such as vehicle deceleration is satisfied, the engine clutch 130 is open and the engine 110 stops (i.e., transition to an EV mode from an HEV mode). In addition, the hybrid vehicle converts driving force of a wheel into electric energy to recharge a battery, which is referred to as braking energy regeneration or regenerative brake.

The starter generator motor 120 functions as a starter motor when the engine is turned on and functions as a generator after the engine is turned on or when rotational energy is recovered during engine off and, thus, the starter generator motor 120 may also be referred to as a hybrid starter generator (HSG) and, as necessary, may be referred to as an auxiliary motor.

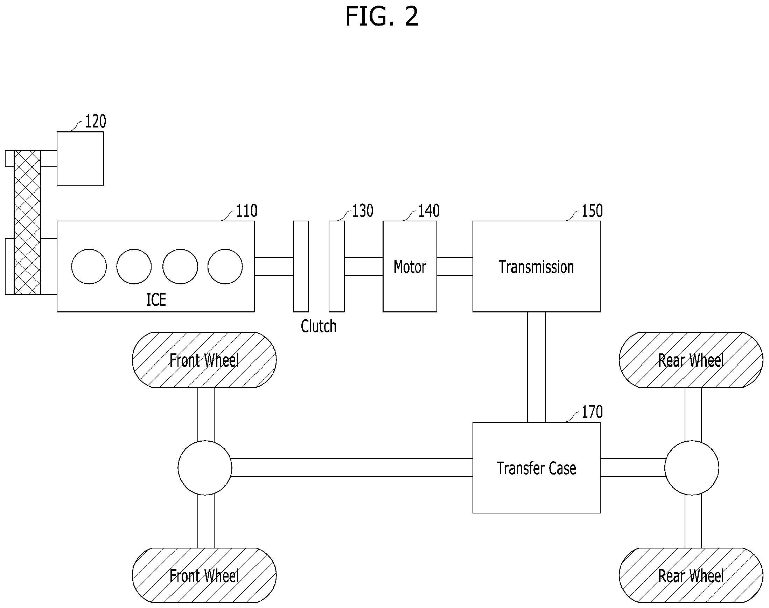

The powertrain structure illustrated in FIG. 1 may correspond to any one of the case in which a driving wheel is a front wheel (i.e., front wheel drive (FWD)) or the case in which the driving wheel is a rear wheel (i.e., rear wheel drive (RWD)). Hereinafter, a powertrain structure of the case in which an all-wheel drive (AWD) method is employed will be described with reference to FIG. 2.

FIG. 2 illustrates an example of a structure of a hybrid vehicle that employs AWD.

Differently from FIG. 1, referring to FIG. 2, a transmission 150 may be connected to a transfer case 170 rather than being directly connected to a final drive 160. The transfer case 170 may variably distribute power transferred from an output end of the transmission 150 to each of front and rear wheels through electronic control. For example, the transfer case 170 may transfer whole driving force only to a front wheel (i.e., front wheel 100%, rear wheel 0%), may transfer whole driving force only to a rear wheel (i.e., front wheel 0%, rear wheel 100%), and may transfer driving force in a predetermined ratio such as front wheel 70%/rear wheel 30%.

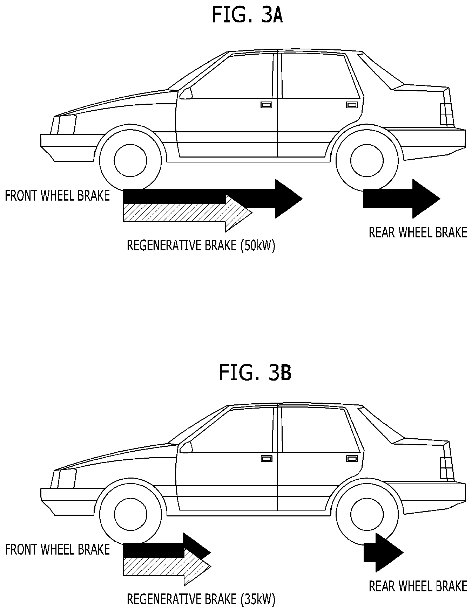

Irrespective of a drive type (FWD, RWD, and AWD), a front/rear wheel distribution ratio of braking force during braking is generally fixed to distribute larger driving force to a front wheel (e.g., front wheel: rear wheel=7:3). However, in the case of an AWD HEV, the transfer case 170 distributes driving force only to a main driving wheel, e.g., a front wheel among four wheels. This is because this corresponds to a state in which mechanical loss of the transfer case 170 is lowest in terms of efficiency and it is possible to apply a regenerative brake control method to an already developed 2WD vehicle without change in terms of a vehicle manufacturer. However, this method is disadvantageous to recover regenerative brake energy in a situation in which required braking force is low, which will be described with reference to FIG. 3.

FIG. 3 is a diagram for explaining a difference in regenerative braking amount depending on amplitude of braking force in an AWD hybrid vehicle.

The following assumption is applied to FIG. 3.

First, a regenerative limit of a motor and a battery that are installed in a hybrid vehicle is 50 kW, and a preset braking force distribution ratio of front/rear wheel is 7:3. During braking, a transfer case applies a distribution ratio of 100% to the front wheel.

Under the assumption, when total required braking power is 100 kW, braking force of 70 kW is assigned to the front wheel and braking force of 30 kw is assigned to the rear wheel, as shown in FIG. 3A. In this case, the transfer case applies a distribution ratio of 100% to the front wheel, and thus, braking force of 50 kW assigned to the front wheel, which is allowed by a motor and a battery, is executed through regenerative brake.

In contrast, when total required braking power is 50 kW, braking force of 35 kW is assigned to the front wheel, and braking force of 15 kW is assigned to the rear wheel, as shown in FIG. 3B. In this case, although a motor and a battery are capable of bearing total required braking power, only 35 kW distributed to the front wheel is executed as regenerative brake due to limitations of a braking force distribution ratio and a driving force distribution ratio. As a result, it is not possible to recover the remaining 15 kW due to friction brake.

The problem corresponds to all AWD eco-friendly vehicles including an electric motor for performing regenerative brake, such as an electric vehicle (EV) or a fuel cell electric vehicle (FCEV) as well as a hybrid vehicle.

### SUMMARY

The present invention relates to an eco-friendly vehicle and a method of controlling braking for the same. Particular embodiments relate to an eco-friendly vehicle including a driving motor and a method of controlling braking for the same for maximizing a regenerative brake amount.

Accordingly, embodiments of the present invention provide an eco-friendly vehicle employing an all-wheel drive (AWD) for enhancing regenerative brake efficiency and a control of controlling braking for the vehicle.

The technical problems solved by the embodiments are not limited to the above technical problems and other technical problems which are not described herein will become apparent to those skilled in the art from the following description.

To achieve these objects and other advantages and in accordance with the purpose of the invention, as embodied and broadly described herein, a method of controlling braking of an all-wheel drive (AWD) eco-friendly vehicle according to the invention is defined in claim 1.

In another embodiment of the present invention, an eco-friendly vehicle includes the features of claim 9.

### BRIEF DESCRIPTION OF THE DRAWINGS

The accompanying drawings, which are included to provide a further understanding of the invention illustrate embodiments of the invention and together with the description serve to explain the principle of the invention. In the drawings:
FIG. 1 is a diagram illustrating an example of a powertrain structure of a general hybrid vehicle;
FIG. 2 illustrates an example of a structure of a hybrid vehicle that employs all-wheel drive (AWD);
FIG. 3 is a diagram for explaining a difference in regenerative braking amount depending on amplitude of braking force in an AWD hybrid vehicle;
FIG. 4 is a block diagram showing an example of a structure of a hybrid vehicle to which embodiments of the present invention are applicable;
FIG. 5 is a diagram for explaining a concept of a target braking speed according to an embodiment of the present invention;
FIG. 6 is a diagram showing an example of the form in which a predicted vehicle speed profile and predicted braking force up to a forward event point are calculated according to an embodiment of the present invention;
FIG. 7 is a diagram showing an example of the form of comparing braking force of a main driving wheel for each brake phase with a regenerative brake available amount according to an embodiment of the present invention;
FIG. 8 is a flowchart showing an example of a procedure of controlling braking by an AWD eco-friendly vehicle according to an embodiment of the present invention; and
FIG. 9 is a diagram showing an example of the form of outputting information indicating that braking control is performed according to an embodiment of the present invention.

### DETAILED DESCRIPTION OF ILLUSTRATIVE EMBODIMENTS

Exemplary embodiments of the present invention are described in detail so as for those of ordinary skill in the art to easily implement with reference to the accompanying drawings. However, the present invention may be modified within its scope, as defined in the appended claims.

In addition, when a certain part "includes" a certain component, this indicates that the part may further include another component instead of excluding another component unless otherwise stated. The same reference numbers will be used throughout the drawings and the specification to refer to the same parts.

As described above, in a general all-wheel drive (AWD) eco-friendly vehicle, a braking force distribution ratio and an AWD distribution ratio of a front/rear wheel during braking is fixed irrespective of required braking power, and thus, there is a limit in efficiency of regenerative brake. Accordingly, according to an embodiment of the present invention, various pieces of information may be combined to predict braking power, and an AWD distribution ratio for prioritizing energy recovery amount or transfer efficiency may be determined based on the predicted braking power.

In the following description, embodiments of the present invention are described in terms of an AWD hybrid vehicle having the powertrain structure shown in FIG. 2. However, this is for convenience of description, and it would be obvious to one of ordinary skill in the art that the embodiments of the present invention are also applied to any type of AWD eco-friendly vehicle as long as the vehicle is capable of performing regenerative brake and distributing driving force to each of four wheels through a transfer case.

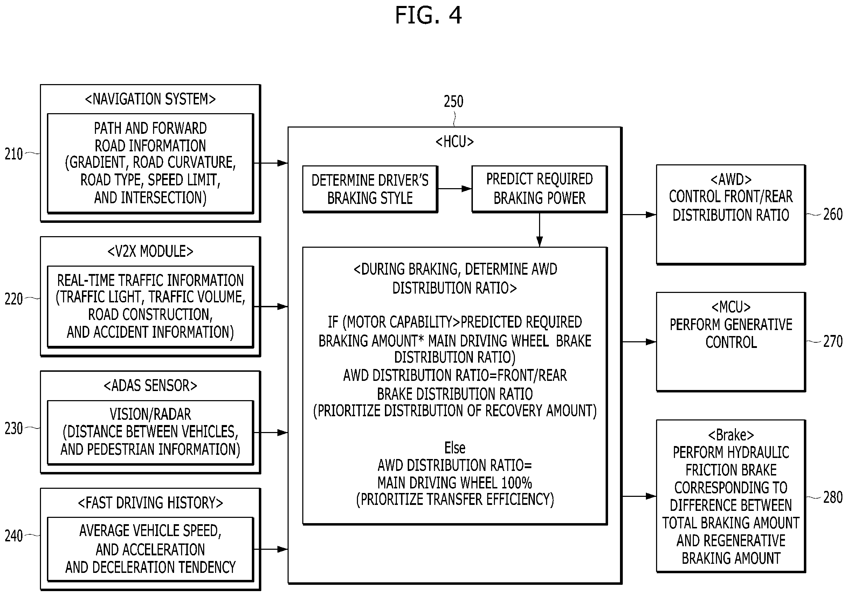

FIG. 4 is a block diagram showing an example of a structure of a hybrid vehicle to which embodiments of the present invention are applicable.

Referring to FIG. 4, a hybrid vehicle according to an embodiment may include a navigation system 210, a vehicle to anything (V2X) module 220, an advanced driver assistance system (ADAS) sensor 230, a fast driving history manager 240, a controller (e.g., a hybrid control unit (HCU)) 250, an all-wheel drive (AWD) controller 260, a motor control unit (MCU) 270, and a brake controller 280.

Only components related to the present embodiment illustrated in FIG. 4 are illustrated and greater or fewer components may alternatively be applied to embody an actual vehicle.

First, the navigation system 210 may provide information on a path and a forward road to the HCU 250. Here, the forward road information may include information on a gradient, a road curvature, a road type, a speed limit, an intersection, or the like, but the present invention is not limited thereto. The path information may be related to a destination that is explicitly set by a driver, but alternatively, may be set through learning based on a driving history of the driver without a command input.

The V2X module 220 may receive real-time traffic information from an infrastructure or a surrounding vehicle. An example of the real-time traffic information may include information on a traffic light, a traffic volume, whether construction is performed, an accident, or the like, but the present invention is not limited thereto. A function of the V2X module may be replaced through a telematics module or the navigation system 210.

The ADAS sensor 230 may include a vision sensor, a radar sensor, or the like, and may detect an object around a vehicle, for example, information on a distance between vehicles with respect to other vehicles, a relative speed, or a pedestrian.

The fast driving history manager 240 may accumulate and record at least one of an average vehicle speed or an acceleration and deceleration tendency for each deceleration event (e.g., a speed camera, a ramp section, a speed bump, or when a leading vehicle approaches a subject vehicle).

The HCU 250 may determine a driver's braking style based on information acquired from the aforementioned components 210, 220, 230, and 240 and, when predicting braking, the HCU 250 may predict braking required power for the corresponding braking. In this case, braking may be predicted when there is a deceleration event on a forward path acquired from the navigation system 210, a distance from an object (e.g., another vehicle or a pedestrian) around a vehicle is reduced to a predetermined distance or less, or when a relative speed of a subject vehicle is high compared with a distance, and a prediction time point may be a time point at which a driver releases manipulation of an accelerator pedal, but the present invention is not limited thereto.

The HCU 250 may determine an AWD distribution ratio during braking based on the predicted braking required power. When a regeneration capability of a motor (which is limited by a battery state) is larger than the product of the braking required power and a brake distribution ratio with respect to a main driving wheel, an energy recovery amount may be prioritized, and a final AWD distribution ratio may be determined as a brake distribution ratio. In an opposite case (that is, when the product of the braking required power and the brake distribution ratio with respect to the main driving wheel is equal to or greater than the motor regeneration capability), the HCU 250 may assign 100% of an AWD distribution ratio to the main driving wheel in prioritization of transfer efficiency. Here, the main driving wheel may refer to a driving wheel side that is capable of transferring power of a driving motor or braking force with higher transfer efficiency or transferring higher power (or braking force) through a transfer case when any one of the front wheel and the rear wheel, which corresponds to the main driving wheel, is compared with the other one.

The AWD controller 260 may control the transfer case according to the AWD distribution ratio determined by the HCU 250 during braking.

The MCU 270 may control the driving motor to perform regenerative brake according to the brake distribution ratio and the AWD distribution ratio determined by the HCU 250.

The brake controller 280 may control a hydraulic brake to execute a braking amount obtained by subtracting a regenerative braking amount from a total braking amount through the hydraulic friction brake.

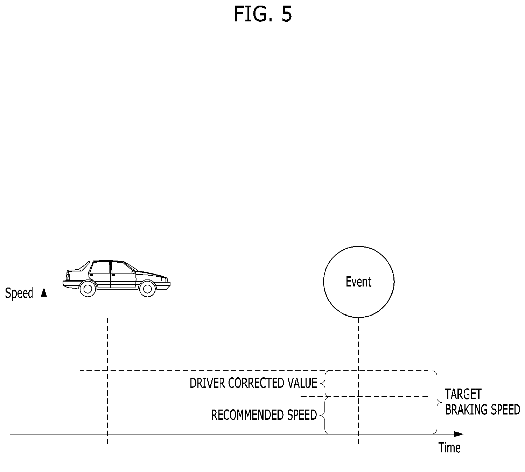

Hereinafter, an operation procedure of a hybrid controller will be described in more detail with reference to FIGs. 5 to 7.

As described above, the HCU 250 may determine the driver's braking style. To this end, the HCU 250 may monitor driving preference information based on a detailed map of the navigation system 210, information acquired from the V2X module 220, the ADAS sensor 230, or the like, and vehicle speed/acceleration data up to the present.

When predicting a brake due to a forward event, the HCU 250 may determine a target braking speed (i.e., target speed to be lastly reached through braking), and the determination time point may be a time point at which a driver releases manipulation of an accelerator pedal, but the present invention is not limited thereto. Here, the HCU 250 may use a recommended speed for each forward event and a driver corrected value learned through the recommended speed for each forward event in order to determine the target braking speed, which will be described with reference to FIG. 5.

FIG. 5 is a diagram for explaining a concept of a target braking speed according to an embodiment of the present invention.

Referring to FIG. 5, the target braking speed may be obtained by adding the learned driver corrected value to a recommended speed corresponding to a forward event.

**[Table 1]**

| Event | speed camera | Ramp | speed bump | forward vehicle | ··· |
|---|---|---|---|---|---|
| recommended speed | speed limit | recommended speed for each curvature | 20kph | forward vehicle speed | ··· |
| driver corrected value(leaming) | -5 kph | +20 kph | +10 kph | +0 kph | ··· |

For example, as shown in Table 1 above, when a driver corrected value is learned, if a forward event is a speed camera with 80 kph of a speed limit, a target braking speed to which the driver corrected value is applied may be 75 kph.

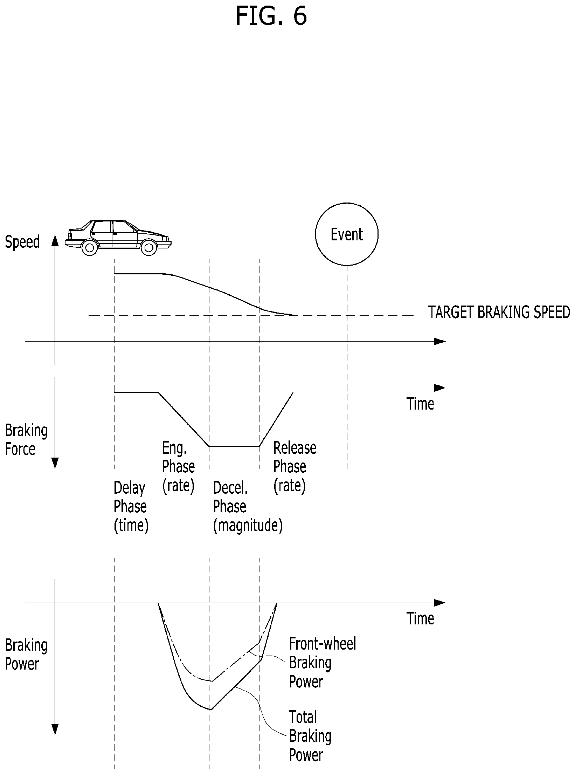

When determining the target braking speed, the HCU 250 may determine a target braking deceleration pattern and may estimate target braking power based on the determined target braking deceleration pattern. The HCU 250 may calculate braking power to be distributed to driving wheels depending on the target braking power, which will be described with reference to FIG. 6.

FIG. 6 is a diagram showing an example of the form in which a predicted vehicle speed profile and predicted braking force up to a forward event point are calculated according to an embodiment of the present invention.

FIG. 6 shows three graphs that share a horizontal axis corresponding to a time. Vertical axes of upper, intermediate, and lower graphs indicate a vehicle speed, braking force, and braking power, respectively.

Referring to FIG. 6, the HCU 250 may estimate a predicted speed profile and predicted braking force up to a target braking speed for a forward event using a learning result of a driver. In this case, a time until the forward event is reached may be classified into a plurality of phases depending on a change in braking force. In detail, delay occurs until a driver manipulates a brake pedal after the driver recognizes the forward event to release an accelerator pedal, and braking force is not applied for movement, and accordingly, the current phase may be a delay phase in which a time is considered. Then, an engaging phase in which, as the driver begins to manipulate a brake pedal, braking force is gradually increased, and an increase rate is considered may be positioned after the delay phase, and a deceleration phase in which relatively constant braking force is applied and magnitude is considered may be positioned after the engaging phase. A release phase in which, as a current speed is close to a target braking speed, the driver begins to release a brake pedal, and a reduction rate in braking force is considered may be positioned last. Needless to say, such phase classification in the deceleration profile is exemplary and the present invention is not limited thereto.

The HCU 250 may calculate target braking power required for a braking section (i.e., an engaging phase, a deceleration phase, and a release phase) based on the estimated predicted speed profile and the predicted braking force and may calculate braking power of the main driving wheel (generally, a front wheel) based on the calculated target braking power. In this case, the braking power of the main driving wheel may be calculated by applying a braking force distribution ratio (e.g., 70%) with respect to the predetermined main driving wheel.

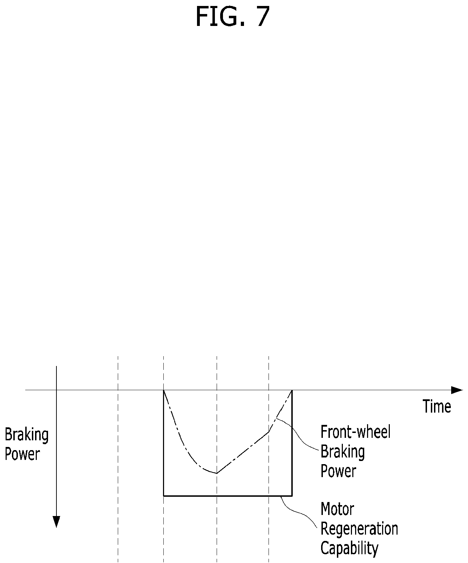

Then, the HCU 250 may compare braking force of the main driving wheel with regeneration capability of a motor, which will be described with reference to FIG. 7. FIG. 7 is a diagram showing an example of the form of comparing braking force of a main driving wheel for each brake phase with a regenerative brake available amount according to an embodiment of the present invention.

FIG. 7 illustrates the form of determining whether braking power (i.e., front-wheel braking power) of a main driving wheel is within regeneration capability (motor regeneration capability) of a motor in a braking section, in which case braking force of a main driving wheel for each brake phase is compared with a regenerative brake available amount. Needless to say, such comparison form is exemplary, and an accumulated value (area) for each phase, an average, or the like may also be compared with a regenerative brake available amount.

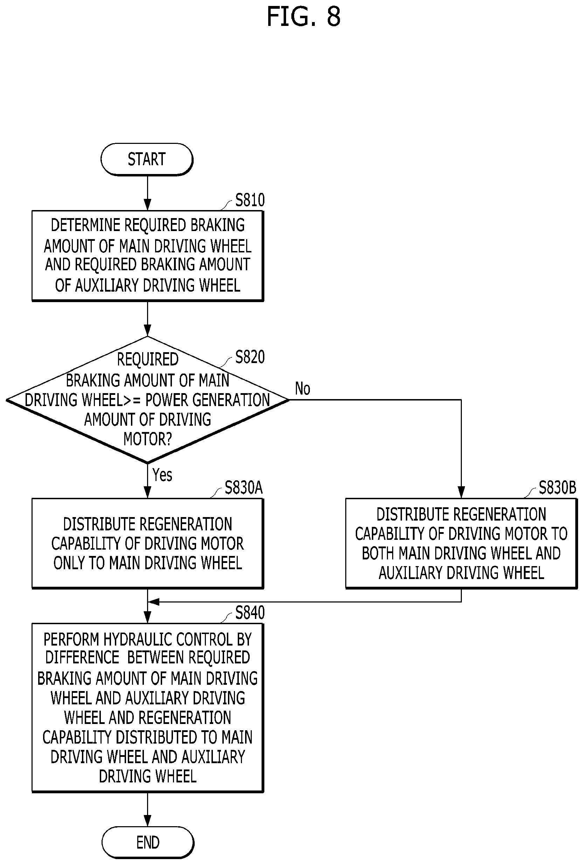

The aforementioned braking control procedure is summarized in a flowchart of FIG. 8. FIG. 8 is a flowchart showing an example of a procedure of controlling braking by an AWD eco-friendly vehicle according to an embodiment of the present invention.

Referring to FIG. 8, in a situation in which deceleration is required (or predicted) while a vehicle travels, a hybrid controller may determine a required braking amount of a main driving wheel and a required braking amount of an auxiliary driving wheel (S810). As described above with reference to FIGs. 5 and 6, the present procedure may be based on a brake pedal input of a driver and a vehicle speed (that is, a profile of a target braking speed). Here, information on a forward situation and a braking pattern learning result of the driver, which are collected by a sensor or a communication device installed in the vehicle, may be further applied.

The hybrid controller may compare the required braking amount of the main driving wheel with a power generation amount (that is, a regenerative brake available amount) of a driving motor (S820).

When the required braking amount of the main driving wheel is equal to or greater than a power generation amount of the driving motor (YES of S820), the hybrid controller may perform control to distribute regeneration capability of the driving motor only to the main driving wheel (i.e., AWD distribution ratio being 'main driving wheel: auxiliary driving wheel = 10:0') (S830A).

In contrast, when the required braking amount of the main driving wheel is less than the power generation amount of the driving motor (NO of S820), the hybrid controller may distribute regeneration capability of the driving motor to both the main driving wheel and the auxiliary driving wheel (S830B).

As the AWD distribution ratio is completely determined, a brake controller may perform hydraulic control by a difference between the required braking amount and the distributed regeneration capability with respect to each of the main driving wheel and the auxiliary driving wheel (S840).

As described above with reference to FIG. 8, although the case in which the hybrid controller determines the required braking amount of the main driving wheel and the auxiliary driving wheel has been described, the present invention is not limited thereto, and the hybrid controller may also determine distribution of generative braking force based on a different type of information. For example, the hybrid controller may determine distribution of regeneration capability based on a regenerative brake allowable amount instead of the required braking amount of each driving wheel. In detail, in a situation in which a vehicle needs to be decelerated while traveling, the hybrid controller may determine each of the regenerative brake allowable amount of the main driving wheel and the regenerative brake allowable amount of the auxiliary driving wheel, and may compare the regenerative brake allowable amount of the main driving wheel with the power generation available amount of the driving motor, and as a comparison result, when the regenerative brake allowable amount of the main driving wheel is equal to or greater than the power generation available amount, the hybrid controller may distribute the regeneration capability of the driving motor only to the main driving wheel through the transfer case, and in an opposite situation, the hybrid controller may distribute the regeneration capability to both the main driving wheel and the auxiliary driving wheel through the transfer case. As such, the hybrid controller may perform control to embody braking force of the motor using a smaller value of the sum of the regenerative brake allowable amount of the main driving wheel and the regenerative brake allowable amount of the auxiliary driving wheel, and the power generation available amount.

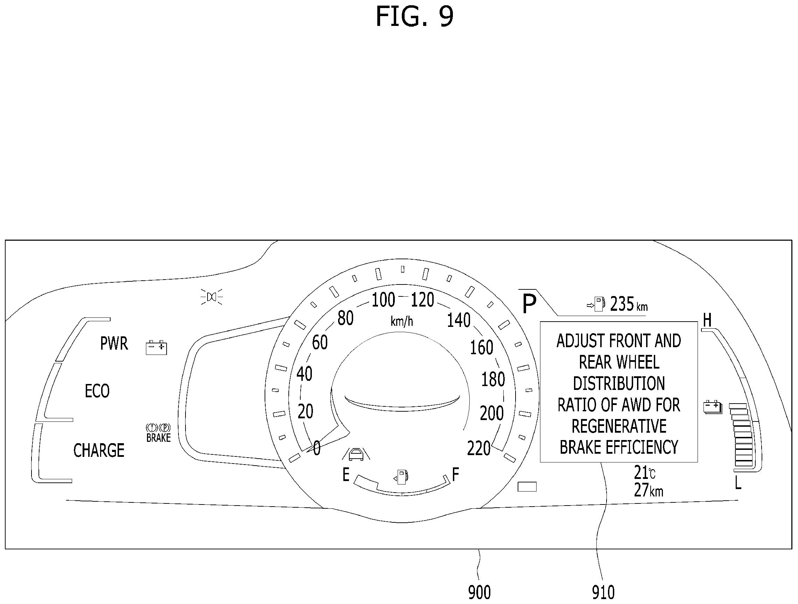

The aforementioned change in the AWD distribution ratio during braking may be output in the form recognizable by a driver. In detail, the hybrid vehicle according to an embodiment may include a display of a cluster, a head unit, or an audio/video/navigation (AVN) system, or a display device of a head up display (HUD). When receiving a signal indicating whether the AWD distribution ratio is changed, the display device may display corresponding information, which will be described with reference to FIG. 9.

FIG. 9 is a diagram showing an example of the form of outputting information indicating that braking control is performed according to an embodiment of the present invention.

Referring to FIG. 9, an all-wheel drive (AWD) eco-friendly vehicle according to an embodiment may output, in the form of a text, information indicating that an AWD distribution ratio is adjusted for maximizing a regenerative braking amount during braking in a region 910 of a cluster 900, in which an arbitrary text is permitted to be displayed.

Needless to say, the display type is exemplary, and the text may be replaced with the form of a warning light that blinks at a fixed position or may be displayed in the form of an icon. In addition, the changed AWD distribution ratio may be displayed using a number or graph corresponding to a distribution ratio for each driving wheel with images of four wheels, but the present invention is not limited thereto.

In addition, needless to say, a displayed position as well as the display form may also be changed to another position in a cluster, or changed to a display of an AVN system or a head unit, or a head up display.

The eco-friendly vehicle related to at least one embodiment of the present invention as configured above may variably distribute driving force during braking by predicting braking power, thereby enhancing regenerative brake efficiency.

It will be appreciated by persons skilled in the art that that the effects that could be achieved with the present invention are not limited to what has been particularly described hereinabove and other advantages of the present invention will be more clearly understood from the detailed description.

The aforementioned present invention can also be embodied as computer readable code stored on a computer readable recording medium. The computer readable recording medium is any data storage device that can store data which can thereafter be read by a computer. Examples of the computer readable recording medium include a hard disk drive (HDD), a solid state drive (SSD), a silicon disc drive (SDD), read-only memory (ROM), random-access memory (RAM), CD-ROM, magnetic tapes, floppy disks, optical data storage devices, etc.

## Claims

1. A method of controlling braking of an all-wheel drive (AWD) eco-friendly vehicle having a transfer case (170) disposed between a driving motor (140) and a plurality of driving wheels including a main driving wheel and an auxiliary driving wheel, the method comprising:
determining (S810) a first required braking amount of the main driving wheel and a second required braking amount of the auxiliary driving wheel in a situation in which the vehicle needs to be decelerated while traveling;
comparing (S820) the first required braking amount with a regenerative brake available amount of the driving motor;
as a result of the comparing, when the first required braking amount is equal to or greater than the regenerative brake available amount, distributing (S830A) regeneration capability of the driving motor only to the main driving wheel through the transfer case, and when the first required braking amount is less than the regenerative brake available amount, distributing (S830B) the regeneration capability to both the main driving wheel and the auxiliary driving wheel through the transfer case; and
executing (S840) each of a difference between the first required braking amount and first regeneration capability of the regeneration capability, distributed to the main driving wheel, and a difference between the second required braking amount and second regeneration capability of the regeneration capability, distributed to the auxiliary driving wheel, through a hydraulic brake device,
wherein distributing the regeneration capability includes distributing the first regeneration capability and the second regeneration capability in a same distribution ratio as a distribution ratio of the first required braking amount and the second required braking amount.

2. The method of claim 1, wherein the main driving wheel is a driving wheel having large power of the driving motor or large transfer efficiency or amplitude of the regeneration capability through the transfer case, compared with the auxiliary driving wheel.

3. The method of claim 1, wherein the distribution ratio of the first required braking amount and the second required braking amount is a predetermined value.

4. The method of any one of the preceding claims, wherein the determining is performed based on manipulation of a brake pedal and a vehicle speed, or forward traffic situation information and a braking pattern learning result of a driver, collected by at least one of a sensor or a communication device.

5. The method of any one of the preceding claims, wherein the determining includes:
determining a target braking speed based on a recommended speed corresponding to an event corresponding to a reason of deceleration while the vehicle travels and a driver corrected value corresponding to the event; and
determining a predicted speed profile and predicted braking force up to the target braking speed.

6. The method of claim 5, wherein the determining the predicted speed profile and the predicted braking force is performed for each of a plurality of phases according to a change of the predicted braking force.

7. The method of claim 6, wherein the comparing is performed for each of the plurality of phases.

8. The method of any one of the preceding claims, wherein the determining is performed when an event corresponding to a reason of deceleration is present forward while the vehicle travels and a brake pedal is released.

9. An eco-friendly vehicle comprising:
a plurality of driving wheels including a main driving wheel and an auxiliary driving wheel;
a driving motor (140);
a transfer case (170) disposed between the driving motor and the plurality of driving wheels including the main driving wheel and the auxiliary driving wheel;
a first controller configured to determine a first required braking amount of the main driving wheel and a second required braking amount of the auxiliary driving wheel in a situation in which the vehicle needs to be decelerated while traveling, to compare the first required braking amount with a regenerative brake available amount of the driving motor, and, as a result of the comparing, when the first required braking amount is equal to or greater than the regenerative brake available amount, to distribute regeneration capability of the driving motor only to the main driving wheel through the transfer case, and when the first required braking amount is less than the regenerative brake available amount, to distribute the regeneration capability to both the main driving wheel and the auxiliary driving wheel through the transfer case; and
a second controller configured to execute each of a difference between the first required braking amount and first regeneration capability of the regeneration capability, distributed to the main driving wheel, and a difference between the second required braking amount and second regeneration capability of the regeneration capability, distributed to the auxiliary driving wheel, through a hydraulic brake device,
wherein the first controller is configured to distribute the first regeneration capability and the second regeneration capability in a same distribution ratio as a distribution ratio of the first required braking amount and the second required braking amount.

10. The eco-friendly vehicle of claim 9, wherein the main driving wheel is a driving wheel having large power of the driving motor or large transfer efficiency or amplitude of the regeneration capability through the transfer case, compared with the auxiliary driving wheel.

11. The eco-friendly vehicle of any one of claims 9 to 10, wherein the first controller is configured to determine the first required braking amount and the second required braking amount based on manipulation of a brake pedal and a vehicle speed, or forward traffic situation information and a braking pattern learning result of a driver, collected by at least one of a sensor or a communication device.

12. The eco-friendly vehicle of any one of claims 9 to 11, wherein the first controller is configured to determine a target braking speed based on a recommended speed corresponding to an event corresponding to a reason of deceleration while the vehicle travels and a driver corrected value corresponding to the event, and determine the first required braking amount and the second required braking amount by determining a predicted speed profile and predicted braking force up to the target braking speed.

13. The eco-friendly vehicle of claim 12, wherein the first controller is configured to determine the predicted speed profile and the predicted braking force for each of a plurality of phases according to a change of the predicted braking force.

## Patentansprüche

1. Verfahren zum Steuern des Bremsens eines umweltfreundlichen Fahrzeugs mit Allradantrieb (AWD), das ein Verteilergetriebe (170) aufweist, das zwischen einem Antriebsmotor (140) und einer Vielzahl von Antriebsrädern, einschließlich eines Hauptantriebsrads und eines Hilfsantriebsrads, angeordnet ist, wobei das Verfahren umfasst:
Bestimmen (S810) einer ersten erforderlichen Bremsmenge des Hauptantriebsrades und einer zweiten erforderlichen Bremsmenge des Hilfsantriebsrades in einer Situation, in der das Fahrzeug während der Fahrt abgebremst werden muss;
Vergleichen (S820) der ersten erforderlichen Bremsmenge mit einer verfügbaren regenerativen Bremsmenge des Antriebsmotors;
als Ergebnis des Vergleichens, wenn die erste erforderliche Bremsmenge gleich oder größer als die verfügbare regenerative Bremsmenge ist, Verteilen (S830A) der Regenerationsfähigkeit des Antriebsmotors nur auf das Hauptantriebsrad über das Verteilergetriebe, und wenn die erste erforderliche Bremsmenge kleiner als die verfügbare regenerative Bremsmenge ist, Verteilen (S830B) der Regenerationsfähigkeit sowohl auf das Hauptantriebsrad als auch auf das Hilfsantriebsrad über das Verteilergetriebe; und
Ausführen (S840) jeweils einer Differenz zwischen der ersten erforderlichen Bremsmenge und der ersten Regenerationsfähigkeit der Regenerationsfähigkeit, die auf das Hauptantriebsrad verteilt wird, und einer Differenz zwischen der zweiten erforderlichen Bremsmenge und der zweiten Regenerationsfähigkeit der Regenerationsfähigkeit, die auf das Hilfsantriebsrad verteilt wird, durch eine hydraulische Bremsvorrichtung,
wobei das Verteilen der Regenerationsfähigkeit das Verteilen der ersten Regenerationsfähigkeit und der zweiten Regenerationsfähigkeit in einem gleichen Verteilungsverhältnis wie ein Verteilungsverhältnis der ersten erforderlichen Bremsmenge und der zweiten erforderlichen Bremsmenge einschließt.

2. Verfahren nach Anspruch 1, wobei das Hauptantriebsrad ein Antriebsrad ist, das im Vergleich zum Hilfsantriebsrad eine große Leistung des Antriebsmotors oder eine große Übertragungseffizienz oder Amplitude der Regenerationsfähigkeit durch das Verteilergetriebe aufweist.

3. Verfahren nach Anspruch 1, wobei das Verteilungsverhältnis zwischen der ersten erforderlichen Bremsmenge und der zweiten erforderlichen Bremsmenge ein vorbestimmter Wert ist.

4. Verfahren nach einem der vorstehenden Ansprüche, wobei das Bestimmen auf Grundlage der Betätigung eines Bremspedals und einer Fahrzeuggeschwindigkeit oder auf Grundlage von Informationen über eine vorausliegende Verkehrssituation und eines Bremsmuster-Lernergebnisses eines Fahrers durchgeführt wird, die von mindestens einem Sensor oder einer Kommunikationsvorrichtung erfasst werden.

5. Verfahren nach einem der vorstehenden Ansprüche, wobei das Bestimmen Folgendes einschließt:
Bestimmen einer Zielbremsgeschwindigkeit auf Grundlage einer empfohlenen Geschwindigkeit, die einem Ereignis entspricht, das einem Grund für eine Abbremsung während der Fahrt des Fahrzeugs entspricht, und eines fahrerkorrigierten Wertes, der dem Ereignis entspricht; und
Bestimmen eines vorhergesagten Geschwindigkeitsprofils und einer vorhergesagten Bremskraft bis zur Zielbremsgeschwindigkeit.

6. Verfahren nach Anspruch 5, wobei das Bestimmen des vorhergesagten Geschwindigkeitsprofils und der vorhergesagten Bremskraft für jede einer Vielzahl von Phasen entsprechend einer Änderung der vorhergesagten Bremskraft durchgeführt wird.

7. Verfahren nach Anspruch 6, wobei das Vergleichen für jede der Vielzahl von Phasen durchgeführt wird.

8. Verfahren nach einem der vorstehenden Ansprüche, wobei das Bestimmen durchgeführt wird, wenn ein Ereignis, das einem Grund der Abbremsung entspricht, vorausliegend vorhanden ist, während das Fahrzeug fährt und ein Bremspedal freigegeben wird.

9. Umweltfreundliches Fahrzeug, umfassend:
eine Vielzahl von Antriebsrädern, einschließlich eines Hauptantriebsrads und eines Hilfsantriebsrads;
einen Antriebsmotor (140);
ein Verteilergetriebe (170), das zwischen dem Antriebsmotor und der Vielzahl von Antriebsrädern, einschließlich des Hauptantriebsrads und des Hilfsantriebsrads, angeordnet ist;
eine erste Steuereinheit, die so konfiguriert ist, dass sie eine erste erforderliche Bremsmenge des Hauptantriebsrads und eine zweite erforderliche Bremsmenge des Hilfsantriebsrads in einer Situation bestimmt, in der das Fahrzeug während der Fahrt abgebremst werden muss, dass sie die erste erforderliche Bremsmenge mit einer verfügbaren regenerativen Bremsmenge des Antriebsmotors vergleicht und dass sie, als Ergebnis des Vergleichens, wenn die erste erforderliche Bremsmenge gleich oder größer als die verfügbare regenerative Bremsmenge ist, die Regenerationsfähigkeit des Antriebsmotors über das Verteilergetriebe nur auf das Hauptantriebsrad verteilt, und dass sie, wenn die erste erforderliche Bremsmenge kleiner als die verfügbare regenerative Bremsmenge ist, die Regenerationsfähigkeit über das Verteilergetriebe sowohl auf das Hauptantriebsrad als auch auf das Hilfsantriebsrad verteilt; und
eine zweite Steuereinheit, die so konfiguriert ist, dass sie jeweils eine Differenz zwischen der ersten erforderlichen Bremsmenge und der ersten Regenerationsfähigkeit der Regenerationsfähigkeit, die auf das Hauptantriebsrad verteilt wird, und eine Differenz zwischen der zweiten erforderlichen Bremsmenge und der zweiten Regenerationsfähigkeit der Regenerationsfähigkeit, die auf das Hilfsantriebsrad verteilt wird, über eine hydraulische Bremsvorrichtung ausführt,
wobei die erste Steuereinheit so konfiguriert ist, dass sie die erste Regenerationsfähigkeit und die zweite Regenerationsfähigkeit in einem gleichen Verteilungsverhältnis wie ein Verteilungsverhältnis der ersten erforderlichen Bremsmenge und der zweiten erforderlichen Bremsmenge verteilt.

10. Umweltfreundliches Fahrzeug nach Anspruch 9, wobei das Hauptantriebsrad ein Antriebsrad ist, das im Vergleich zum Hilfsantriebsrad eine große Leistung des Antriebsmotors oder eine große Übertragungseffizienz oder Amplitude der Regenerationsfähigkeit durch das Verteilergetriebe aufweist.

11. Umweltfreundliches Fahrzeug nach einem der Ansprüche 9 bis 10, wobei die erste Steuereinheit so konfiguriert ist, dass sie die erste erforderliche Bremsmenge und die zweite erforderliche Bremsmenge auf Grundlage der Betätigung eines Bremspedals und einer Fahrzeuggeschwindigkeit oder auf Grundlage von Informationen über die vorausliegende Verkehrssituation und eines Bremsmuster-Lernergebnisses eines Fahrers bestimmt, die von mindestens einem Sensor oder einer Kommunikationsvorrichtung erfasst werden.

12. Umweltfreundliches Fahrzeug nach einem der Ansprüche 9 bis 11, wobei die erste Steuereinheit so konfiguriert ist, dass sie eine Zielbremsgeschwindigkeit auf Grundlage einer empfohlenen Geschwindigkeit, die einem Ereignis entspricht, das einem Grund für die Abbremsung während der Fahrt des Fahrzeugs entspricht, und eines fahrerkorrigierten Wertes, der dem Ereignis entspricht, bestimmt, und die erste erforderliche Bremsmenge und die zweite erforderliche Bremsmenge bestimmt, indem sie ein vorhergesagtes Geschwindigkeitsprofil und eine vorhergesagte Bremskraft bis zu der Zielbremsgeschwindigkeit bestimmt.

13. Umweltfreundliches Fahrzeug nach Anspruch 12, wobei die erste Steuereinheit so konfiguriert ist, dass sie das vorhergesagte Geschwindigkeitsprofil und die vorhergesagte Bremskraft für jede einer Vielzahl von Phasen entsprechend einer Änderung der vorhergesagten Bremskraft bestimmt.

## Revendications

1. Procédé de commande de freinage d'un véhicule écologique à quatre roues motrices (AWD) présentant un boîtier de transfert (170) disposé entre un moteur (140) d'entraînement et une pluralité de roues motrices incluant une roue motrice principale et une roue motrice auxiliaire, le procédé comprenant :
la détermination (S810) d'une première quantité de freinage nécessaire de la roue motrice principale et d'une deuxième quantité de freinage nécessaire de la roue motrice auxiliaire dans une situation dans laquelle le véhicule a besoin d'être ralenti tout en se déplaçant ;
la comparaison (S820) de la première quantité de freinage nécessaire à une quantité disponible de freinage à récupération du moteur d'entraînement ;
à la suite de la comparaison, lorsque la première quantité de freinage nécessaire est supérieure ou égale à la quantité disponible de freinage à récupération, la distribution (S830A) d'une capacité de récupération du moteur d'entraînement uniquement à la roue motrice principale par le biais du boîtier de transfert, et lorsque la première quantité de freinage nécessaire est inférieure à la quantité disponible de freinage à récupération, la distribution (S830B) de la capacité de récupération à la fois à la roue motrice principale et à la roue motrice auxiliaire par le biais du boîtier de transfert ; et
la mise en oeuvre (S840) de chacune parmi une différence entre la première quantité de freinage nécessaire et une première capacité de récupération de la capacité de récupération, distribuée à la roue motrice principale, et une différence entre la deuxième quantité de freinage nécessaire et une deuxième capacité de récupération de la capacité de récupération, distribuée à la roue motrice auxiliaire, par le biais d'un dispositif à freinage hydraulique,
dans lequel la distribution de la capacité de récupération inclut la distribution de la première capacité de récupération et de la deuxième capacité de récupération selon un même rapport de distribution qu'un rapport de distribution de la première quantité de freinage nécessaire et de la deuxième quantité de freinage nécessaire.

2. Procédé selon la revendication 1, dans lequel la roue motrice principale est une roue motrice présentant une grande puissance du moteur d'entraînement ou une grande amplitude ou efficacité de transfert de la capacité de récupération par le biais du boîtier de transfert, par rapport à la roue motrice auxiliaire.

3. Procédé selon la revendication 1, dans lequel le rapport de distribution de la première quantité de freinage nécessaire et de la deuxième quantité de freinage nécessaire est une valeur prédéterminée.

4. Procédé selon l'une quelconque des revendications précédentes, dans lequel la détermination est mise en oeuvre sur la base d'une manipulation d'une pédale de frein et d'une vitesse de véhicule, ou d'informations de situation de trafic vers l'avant et d'un résultat d'apprentissage de profil de freinage d'un conducteur, collecté par au moins un parmi un capteur ou un dispositif de communication.

5. Procédé selon l'une quelconque des revendications précédentes, dans lequel la détermination inclut :
la détermination d'une vitesse de freinage cible sur la base d'une vitesse recommandée correspondant à un événement correspondant à une raison de ralentissement tandis que le véhicule se déplace et d'une valeur corrigée par le conducteur correspondant à l'événement ; et
la détermination d'un profil de vitesse prédit et d'une force de freinage prédite jusqu'à la vitesse de freinage cible.

6. Procédé selon la revendication 5, dans lequel la détermination du profil de vitesse prédit et de la force de freinage prédite est mise en oeuvre pour chacune d'une pluralité de phases en fonction d'un changement de la force de freinage prédite.

7. Procédé selon la revendication 6, dans lequel la comparaison est mise en oeuvre pour chacune de la pluralité de phases.

8. Procédé selon l'une quelconque des revendications précédentes, dans lequel la détermination est mise en oeuvre lorsqu'un événement correspondant à une raison de ralentissement est présente à l'avant tandis que le véhicule se déplace et qu'une pédale de frein est relâchée.

9. Véhicule écologique comprenant :
une pluralité de roues motrices incluant une roue motrice principale et une roue motrice auxiliaire ;
un moteur (140) d'entraînement ;
un boîtier de transfert (170) disposé entre le moteur d'entraînement et la pluralité de roues motrices incluant la roue motrice principale et la roue motrice auxiliaire ;
un premier dispositif de commande configuré pour déterminer une première quantité de freinage nécessaire de la roue motrice principale et une deuxième quantité de freinage nécessaire de la roue motrice auxiliaire dans une situation dans laquelle le véhicule a besoin d'être ralenti alors qu'il se déplace, pour comparer la première quantité de freinage nécessaire à une quantité disponible de freinage à récupération du moteur d'entraînement, et, à la suite de la comparaison, lorsque la première quantité de freinage nécessaire est supérieure ou égale à la quantité disponible de freinage à récupération, pour distribuer une capacité de récupération du moteur d'entraînement uniquement à la roue motrice principale par le biais du boîtier de transfert, et lorsque la première quantité de freinage nécessaire est inférieure à la quantité disponible de freinage à récupération, pour distribuer la capacité de récupération à la fois à la roue motrice principale et à la roue motrice auxiliaire par le biais du boîtier de transfert ; et
un deuxième dispositif de commande configuré pour mettre en oeuvre chacune parmi une différence entre la première quantité de freinage nécessaire et une première capacité de récupération de la capacité de récupération, distribuée à la roue motrice principale, et une différence entre la deuxième quantité de freinage nécessaire et une deuxième capacité de récupération de la capacité de récupération, distribuée à la roue motrice auxiliaire, par le biais d'un dispositif à freinage hydraulique,
dans lequel le premier dispositif de commande est configuré pour distribuer la première capacité de récupération et la deuxième capacité de récupération selon un même rapport de distribution qu'un rapport de distribution de la première quantité de freinage nécessaire et de la deuxième quantité de freinage nécessaire.

10. Véhicule écologique selon la revendication 9, dans lequel la roue motrice principale est une roue motrice présentant une grande puissance du moteur d'entraînement ou une grande amplitude ou efficacité de transfert de la capacité de récupération par le biais du boîtier de transfert, par rapport à la roue motrice auxiliaire.

11. Véhicule écologique selon l'une quelconque des revendications 9 à 10, dans lequel le premier dispositif de commande est configuré pour déterminer la première quantité de freinage nécessaire et la deuxième quantité de freinage nécessaire sur la base d'une manipulation d'une pédale de frein et d'une vitesse de véhicule, ou d'informations de situation de trafic vers l'avant et d'un résultat d'apprentissage de profil de freinage d'un conducteur, collecté par au moins un parmi un capteur ou un dispositif de communication.

12. Véhicule écologique selon l'une quelconque des revendications 9 à 11, dans lequel le premier dispositif de commande est configuré pour déterminer une vitesse de freinage cible sur la base d'une vitesse recommandée correspondant à un événement correspondant à une raison de ralentissement tandis que le véhicule se déplace et d'une valeur corrigée par le conducteur correspondant à l'événement, et pour déterminer la première quantité de freinage nécessaire et la deuxième quantité de freinage nécessaire en déterminant un profil de vitesse prédit et une force de freinage prédite jusqu'à la vitesse de freinage cible.

13. Véhicule écologique selon la revendication 12, dans lequel le premier dispositif de commande est configuré pour déterminer le profil de vitesse prédit et la force de freinage prédite pour chacune d'une pluralité de phases en fonction d'un changement de la force de freinage prédite.
